# EUROPEAN PATENT APPLICATION

(11) **EP 4 604 337 A1**
(43) Date of publication of application: **20.08.2025**
(21) Application number: 25305106.4
(22) Date of filing: 28.01.2025
(51) Int. Cl.: H02G 1/14, H02G 15/14, H01B 7/282

(54) **A METHOD OF JOINTING CABLES**

(30) Priority: 19.02.2024 NO 20240150
(71) Applicant: Nexans, 92400 Courbevoie (FR)
(72) Inventor: SANGAR, Robin, 92400 Courbevoie (FR); BENGTSSON, Karl Magnus, 92400 Courbevoie (FR); HALL, Matias, 92400 Courbevoie (FR)
(74) Representative: Acapo Onsagers AS

(57) **Abstract**

There is provided a method of jointing a first subsea cable to a second subsea cable. The first subsea cable comprises a first water barrier layer that surrounds a first cable core. The second subsea cable comprises a second water barrier layer that surrounds a second cable core. The method comprises jointing the first and second water barrier layers. The jointing comprising the use of a solid-state diffusion process. Optionally, the jointing comprises bonding an intermediate water barrier to the first and / or second water barrier layers.

## Description

### Field of the invention

The present invention relates to a method of jointing cables, as well as to first and second cables jointed using said method. More specifically, the present invention relates to a method of jointing subsea and / or high voltage cables. More specifically, the present invention relates to a method jointing comprising the use of solid-state diffusion process.

### Background

It is important to prevent water ingress into a subsea cable because water can damage the insulation system of the cable and can cause failure of the cable if the water comes into contact with insulation or a core of the cable. To prevent water ingress, a subsea cable may have a water barrier, which may be referred to as a water barrier layer that surrounds the insulation and conductor of the cable. Conventional cables use extruded lead, typically in the form of a lead sheath, as their water barrier. Lead sheaths are used in most subsea cable projects.

Lead has been used for many years in cables, and particularly in subsea cables, because it has characteristics that make it suitable for use as a water barrier for a subsea cable. For example, it has a relatively low melting point, is a soft metal, and has high malleability. Because it has been used for such a long time, many of the processes for working with lead have not changed for many years.

An example of such a process is the use of "lead wiping" when jointing two cables together. Lead wiping involves a cable technician melting lead and solder and then wiping the mix onto a joint using their hands. Such a process can be wasteful and slow, especially if the cable technician is inexperienced, and, despite protective clothing and equipment being used, can be dangerous for the cable technician. Furthermore, the quality of the joint (e.g. strength and ability to withstand cracking) may be highly dependent on the experience level of the cable technician. Cable technicians with high levels of experience of lead wiping are rare and becoming rarer.

Accordingly, it is desirable to identify new ways of forming water barrier layers for subsea cables for example that are safer, less wasteful, are faster, and / or require fewer hours of time of a cable technician having many years of experience of lead wiping while achieving a high quality (e.g. strong) joint. As the industry seeks to move away from the uses of lead due to its environmental impacts, it is also desirable to identify ways of forming water barrier layers for subsea cables that can use alternative materials.

The present invention attempts to address at least some of these points.

### SUMMARY OF THE INVENTION

The present invention is defined by the appended claims and in the following.

In a first aspect, the invention relates to a method of jointing a first cable or first cable portion to a second cable or second cable portion. In embodiments, the first cable and the second cable are subsea cables. In embodiments, the first cable and the second cable are high-voltage cables. The first cable comprises a first water barrier layer surrounding a first cable core. The second subsea cable comprises a second water barrier layer surrounding a second cable core. The method comprises the step of jointing the first and second water barrier layers, the jointing comprising the use of a solid-state diffusion process.

The inventors have found that jointing the first and second water barriers using a solid-state diffusion process advantageously solves many or all of the problems of conventional lead-wiping, as described above, while achieving good quality and strong bonds. For example, solid-state diffusion processes may not require the introduction of an additional solder mix to achieve a joint. Instead, as described in more detail below, the bond is achieved by the diffusion of atoms of the materials to be bonded to form the bond. Thus, waste is reduced. Furthermore, there may be no need for the cable engineer to handle, wipe or otherwise intimately interact with a solder mix in solid-state diffusion making the process safer. Furthermore, while bonds may take hours to form when using solid-state diffusion, the labour time to set up the process may be relatively low (compared to, for example, the total labour time in lead wiping). Another advantage of jointing using solid-state diffusion is that the bonds formed in solid state diffusion is a "pure" bond. In other words, the bond is formed of the same material as the material of the pieces to be jointed, because the bond is formed by atoms from one-piece diffusing into another. This is unlike bonds formed from solder methods such as lead wiping which typically have a different combination of materials. For example, in lead wiping, the bond is a lead-tin bond rather than a pure lead bond. A pure bond advantageously has improved fatigue resistance.

In some embodiments, the jointing comprises the use of solid-state diffusion to bond the first water barrier layer to the second water barrier layer directly. For example, the solid-state process may be performed while the first water barrier layer is in contact with the second water barrier layer to form the bond.

In some embodiments, the jointing may comprise providing an intermediate water barrier or intermediate water barrier layer. The jointing of the first and second water barrier layers may comprise using a solid-state diffusion process to form a bond between the intermediate water barrier and the first water barrier layer (of the first cable). Alternatively, or additionally, the jointing may comprise using a solid-state diffusion process to form a bond between the intermediate water barrier and the second water barrier layer.

As used herein, "jointing" refers to a method of connecting two sections of cable together to ensure the continuity of the electrical connection between the two cables (through the cable cores or conductors) and maintaining the structural integrity and properties of the jointed cable along the joint. In particular, the present invention relates to cables comprising water barrier layers. A water barrier layer is a layer of the cable that may be arranged to prevent the ingress of moisture or water. As above, the first and second cables comprise water barrier layers surrounding a respective core layer, so the water barrier layers may be arranged to prevent the ingress of moisture or water to the core layer. The jointing of two sections of cable comprising water barrier layers will generally require a step of jointing the first and second water barriers to ensure that a continuous water barrier is provided along the length of joint.

The connecting of two sections of cable has been referred to as "jointing" above but may alternatively be referred to as "joining" of the two cables.

As used herein, the first and second cables being "subsea" cables means that the first and second cables are specifically designed to operate and transmit signals or power when the cable is beneath the water, i.e. when wholly or partially submerged in water. The method does not require the first and second cables to actually be submerged, but to be suitable for submerging. The skilled reader will be familiar with the properties of cables that are suitable for subsea operation. This may mean that the subsea cables have suitable insulation and protection against water ingress while maintaining electrical integrity (hence the presence of the water barrier layer in the cables). This may mean that the subsea cables have layers providing strength and durability to withstand the mechanical stresses associated with installation, seabed conditions, and potential movements caused by tides and currents. The water that the cable is arranged to be submerged in may be salt-water or fresh-water.

As used herein, the first and second cables being "high-voltage" cables means that the first and second cables are specifically designed to transmit currents at voltages that are higher than typical or standard voltage levels and do so efficiently and without damaging the cable. The skilled reader will be familiar with what constitutes a high voltage. For example, high-voltage levels can range from several kilovolts (kV) to megavolts (MV). The skilled reader will also be familiar with the features of a cable making it suitable for high-voltage transmission. This includes having suitable insulation to prevent electrical breakdown and thermal stability to withstand heat that may be generated during high-voltage transmission.

As used herein, a "solid-state diffusion" process is a bonding process which employs the solid-state diffusion of atoms as a main process for the development of a bond or joint, without melting the pieces to be bonded. The bond that is formed is a metallurgical bond that is typically characterized by its high strength and reliability. Solid-state diffusion may also be referred to as diffusion bonding herein. Diffusion bonding may involve keeping two work pieces to be joined in close contact with one another. The two work pieces may comprise the same or similar materials. While in contact, atoms from a first material or work piece diffuse into a second material or work piece. For example, the atoms of the first material may diffuse into a lattice structure of the second material. As diffusion progresses, grain boundaries between the two materials begin to disappear, and a continuous, grain boundary-free bond is formed. This contributes to the strength and integrity of the joint. A diffusion bonding process may involve the application of elevated pressure to help maintain intimate contact between the atoms of the first and second materials or workpieces. Alternatively, or additionally, a diffusion bonding process may involve the application of heat to increase the temperature of the two materials or workpieces. This may be required to activate or accelerate the diffusion process. Generally, the two materials or workpieces should be heated to less than their respective melting points to avoid complete melting. An important parameter for the diffusion process may be the holding time or contact time between the two workpieces or materials. This may need to be long enough to allow for diffusion to proceed to such an extent that a bond of desired strength is formed.

As used herein, a "cable core" may refer to a conductor combined with an insulation system, for example a conductive core or conductor surrounded by an insulation material. The insulating system may comprise multiple layers. For example, the system may comprise a first or inner semi-conductive layer, then an insulating layer, and then a second or outer semi-conductive layer. In other words the cable core may comprise a conductive core or conductor; a first or inner semi-conductive layer, surrounding the conductive core or conductor; an insulating layer, surrounding the first or inner semi-conductive layer, and; an second or outer semi-conductive layer surrounding the insulating layer.

The joint between the first water barrier layer of the first cable and the second water barrier layer of the second cable formed in the above described method may comprise an intermediate or joint piece. The intermediate or joint piece may be referred to as an intermediate water barrier herein. The intermediate water barrier may be bonded, at a first end, to the first water barrier layer and / or may be bonded, at a second end opposite to the first end, to the second water barrier layer.

The intermediate water barrier may extend circumferentially around the first water barrier layer and may be in constant contact with the first water barrier around a full perimeter of the first water barrier layer. The bond between the intermediate water barrier and first water barrier layer may extend continuously around the full perimeter. The bond may be arranged to provide a water-tight seal between the first water barrier and the intermediate water barrier.

The intermediate water barrier may extend circumferentially around the second water barrier layer and may be in constant contact with the second water barrier around a full perimeter of the second water barrier layer. The bond between the intermediate water barrier layer and second water barrier layer may extend continuously around the full perimeter. The bond may be arranged to provide a water-tight seal between the second water barrier and the intermediate water barrier. In this way, a joint between the first and second water barrier layers may be made substantially water-tight and prevent ingress of water to the core layers of the cables.

As used herein, "water-tight" may refer to a seal that prevents the ingress of moisture therethrough to an extent required for the cable joint to meet operational requirements. In the context of subsea cables, this may mean that there is a maximum allowed humidity that is allowed inside (e.g. to permeate through) the water barrier. If the humidity is elevated above this level, there is a risk for electrical breakdown or water treeing in the insulation. There can be differences in the allowed humidity for different electrical insulation systems but, as an example, the relative humidity cannot increase above 70% if water treeing is to be avoided. This may be the case for high voltage cables for carrying alternating current.

At least after the step of jointing the first and second water barrier layers, the intermediate water barrier may form a substantially unbroken and water-tight joint. The intermediate water barrier may be in the form of a sheath. The intermediate water barrier may be substantially tubular.

In some embodiments, the method comprises providing the first cable. The method may further comprise providing the second cable. The method may further comprise providing the intermediate water barrier.

In some embodiments, the intermediate water barrier may be provided as a sheath or pre-formed tubular structure.

In some other embodiments, the intermediate water barrier may be wrapped around the joint. In such embodiments, the intermediate water barrier may have an open or non-tubular structure.

In some embodiments, the intermediate water barrier has a first thickness of more than 1 millimetres, optionally more than 2 millimetres. The first thickness may be the thickness of a portion of the intermediate water barrier that contacts the first water barrier layer. Alternatively, or additionally, the first thickness may be the thickness of a portion of the intermediate water barrier that contacts the second water barrier layer. In some embodiments, the first thickness is less than 10 millimetres, optionally less than 5 millimetres.

In some embodiments, the first and / or second water barrier has a second thickness of more than 1 millimetres, optionally more than 2 millimetres. The second thickness may be the thickness of a portion of the first and / or second water barrier that contacts the intermediate water barrier. In some embodiments, the second thickness is less than 10 millimetres, optionally less than 5 millimetres.

In some embodiments, jointing the first and second water barrier layers comprises: using a solid-state diffusion process to form a first bond. The first bond may be between the intermediate water barrier and the first water barrier layer. The first bond may be formed while a portion of the first water barrier is in contact with the intermediate water barrier layer. As above, the first bond may extend continuously around the first water barrier layer to provide a substantially water-tight seal that prevents the ingress of water where the first water barrier layer is joined to the intermediate water barrier layer.

In some embodiments, jointing the first and second water barrier layers further comprises: using a solid-state diffusion process to form a second bond. The second bond may be between the intermediate water barrier and the second water barrier layer. The second may be formed while a portion of the second water barrier layer is in contact with the intermediate water barrier. As above, the second bond may extend continuously around the second water barrier layer to provide a substantially water-tight seal that prevents the ingress of water where the second water barrier layer is joined to the intermediate water barrier layer.

In some embodiments, the first and second bonds are formed circumferentially around first and second water barrier layers, respectively.

In some embodiments, at least one of the first, second and intermediate water barrier layers comprise a metal. In some embodiments, the metal is lead, copper, nickel, tin, or titanium. The first, second and / or intermediate water barrier layers comprising a metal chosen from this list may include alloys comprising that metal. For example, the first, second and / or intermediate water barrier layers may comprise a copper-nickel alloy. The first, second or intermediate water barrier layers may comprise more than one metal from the list. The inventors have found that it may be particularly preferable for the metal to be lead. Water barrier layers comprising lead have longstanding usage in subsea cables. Lead is advantageously malleable while preventing the ingress or passage of water. Furthermore, lead advantageously has a relatively low melting point. A solid-state diffusion process may comprise heating the workpieces for bonding to between 50% and 90% of a melting temperature of the material to be bonded. Thus, lead, having a relatively low melting point, may advantageously mean that the activation temperature for the solid-state diffusion process may also be relatively low. This may advantageously reduce the heating / energy requirements for the solid-state diffusion process. Lower temperatures may also reduce the risk of heating as part of the solid-state diffusion process from damaging other components of the subsea cable.

In some embodiments, each of the first, second and intermediate water barrier layers comprise a metal. In some embodiments, each of the first, second and intermediate water barrier layers comprise the same metal (e.g. lead).

In some embodiments, the solid-state diffusion process that is used to form either or both of the first bond and the second bond comprises applying a pressure. The pressure may be greater than atmospheric pressure. The pressure may be to maintain contact between the intermediate water barrier layer and the respective first or second water barrier layer. The threshold for solid-state diffusion may be lowered as the pressure is increased. In other words, there may be an activation level above which solid-state diffusion is achieved. Elevated temperature and / or pressure may be needed to reach the activation level. Increased pressure may reduce the temperature requirement for activation. The rate of solid-state diffusion may increase as the pressure increases. Thus, it may be advantageous to increase the pressure to reduce the time taken to form the first or second bond.

For example, the applied pressure may be 1 Megapascal or greater. It may be advantageous for the applied pressure not to cause substantial deformation of the first, second or intermediate water barrier layers. This, therefore, may place an upper limit on the pressure that can be applied. For example, the maximum pressure may be no more than (about) 30% of the material ultimate tensile strength of at least one of the water barriers that are bonded together. For lead-comprising water barriers, the maximum pressure may no more than 10 Megapascals.

In some embodiments, the method may comprise applying pressure by clamping the two components to be bonded together. The clamp may apply a pressure or force holding the first component against or in contact with the second component. The first component may be one of the first water barrier layer or second water barrier layer. The second component may be the intermediate water barrier.

In some embodiments, the method may comprise applying pressure using a pressure chamber. For example, the components to be bonded together may be placed in the pressure chamber. The pressure chamber may surround the joint.

In some embodiments, the solid-state diffusion process used to form at least one of the first bond and the second bond comprises heating at least the portion of the intermediate barrier layer and / or the respective first or second water barrier layer that are in contact with one another to a temperature of greater than 50% of the melting point of the intermediate water barrier (or greater than 50% of the melting point of a material of the intermediate water barrier). As above, solid-state diffusion may be activated above a certain temperature and / or pressure. The inventors have found that heating to the above temperature range (above 50% of the melting point) may provide a good balance between heating requirements and pressure requirements. It may be important to avoid melting of the materials / components to be bonded in the solid-state diffusion process. Thus, the inventors have found that the heating (of the intermediate and / or first or second water barrier layers) may advantageously be less than 90% of the melting temperature of the respective water barrier layers (or a material of the respective water barrier layers).

In some embodiments, the step of heating comprises heating using resistive heaters. For example, if elevated pressure is achieved using one or more clamps, as described above, the one or more clamps may be adapted to comprise one or more resistive heater elements therein. By passing a current through the one or more resistive heater elements, heating may be achieved simultaneously to clamping / applying pressure. Alternatively, or additionally, the step of heating may comprise the use of inductive heating or the use of an oven or heating chamber.

In some embodiments, the solid-state diffusion process involves applying one or both of pressure and heat when forming at least one of the first and second bonds.

In some embodiments, the pressure and / or heat (described above) is applied for at least 1 hour and less than 24 hours. This may be referred to as the hold or holding time. In other words, the hold time or contact time is at least 1 hour and less than 24 hours. Longer hold times may achieve stronger bonds or bonds the extend over thicker or wider regions. However, shorter hold times may be advantageous to reduce the overall time taken to joint first and second cables. The hold time may be affected by the pressure and temperature used in the method. For example, higher temperatures and higher pressures may reduce the hold time needed to achieve a particular bond strength.

The inventors have found that, for bonding / jointing water barriers comprising or consisting of lead, the following combination of temperature, pressure and hold time may be advantageous: between 150 and 200 degrees Celsius, between 3 and 5 Megapascals, and a hold time of between 1 and 5 hours. This combination may achieve an acceptable bond without damaging or deforming the cable as a result of the application of heat or pressure.

In some embodiments, the solid-state diffusion process used to form at least one of the first bond and the second bond comprises cleaning at least the portions of the intermediate barrier layer and the respective first or second water barrier layer that contact one another. This cleaning step may be performed prior to forming the respective bond, optionally immediately prior to forming the respective bond. The cleaning step may advantageously remove an oxidation layer that may have formed on the contact surfaces prior to the jointing process. The presence of an oxidation layer may reduce the effectiveness of the solid-state diffusion process or reduce the rate of diffusion. The cleaning may alternatively or additionally reduce the surface roughness of the contact surfaces prior to the jointing processes. For example, the surface roughness of the cleaned contact surface(s) prior to the jointing process may be no greater than 3 micrometers, optionally no greater than 2 micrometers, optionally no greater than 1.5 micrometers. As used herein, the "surface roughness" may refer to an average surface roughness. Surface roughness may be measured in accordance with ISO 4287:1997.

In some embodiments, a pulsed laser such as a rust-cleaning laser may be used to clean the contact surfaces. In some embodiments, the pulsed laser (e.g. rust-cleaning laser) may have a power of 1 kilowatt or greater, optionally 2 kilowatt or greater, optionally 3 kilowatt or greater.

In some embodiments, a plasma cleaner such as the Plasmabeam PC supplied by Diener Electric (of Nagolder Straße 61, D-72224, Ebhausen, Germany) may be used to clean the contact surfaces.

In some embodiments, the solid-state diffusion process used to form at least one of the first and second bond comprises replacing a portion of air around the joint with an inert gas such as a noble gas or nitrogen. The noble gas may be argon. This may advantageously reduce oxidation rates on the contact surfaces. This may be particularly advantageous after cleaning the contact surfaces to prevent oxidation build up during the solid-state diffusion process. The proportion of air that needs to be replaced may depend on the oxidation rate of the material forming the contact surfaces. If a material has a low oxidation rate, the proportion of air to be replaced may be relatively low. There may be no need for the process to be performed in an environment in which the air has been substantially replaced with an inert gas. Lead has a relatively very low oxidation rate. So, the inventors have found that for lead there may be no need at all to replace any portion of air with an inert gas.

In some embodiments, the method comprises jointing the first and second cable cores before jointing the first and second water barrier layers. This may comprise jointing a first conductor or first conductive core of the first cable core to a second conductor or second conductive core of the second cable core. This may further comprise providing an insulation system the surrounds the joint between the first and second conductive core. For example, this may comprise providing a premolded piece of insulation that surrounds said joint or injection moulding an insulation sheath onto the joint. In another example, providing said insulation may comprise applying insulation tape around the joint of the conducting cores and then vulcanizing the insulation tape.

In a second aspect, the invention relates to a jointed cable comprising a first cable portion jointed to a second cable portion using the method as defined in the first aspect. Thus, the jointed cable of the second aspect may comprise a first water barrier layer of a first cable or cable portion jointed to a second water barrier of a second cable or cable portion.

### Short description of the drawings

In the following description this invention will be further explained by way of exemplary embodiments shown in the drawings:
Fig. 1 shows a cross-sectional schematic view of a first example of a high-voltage subsea cable comprising a single core;
Fig. 2 shows a cross-sectional schematic view of a second example of a high-voltage subsea cable comprising three cores;
Fig. 3A shows a flow diagram of a method of jointing a first and second cable, the method comprising use of a solid-state diffusion process to form bonds;
Fig. 3B shows a flow diagram showing the formation the bonds using the solid-state diffusion process of Fig. 3A in more detail;
Figs. 4A to 4F show steps of the method of Figure 3A according to a first example, in which:

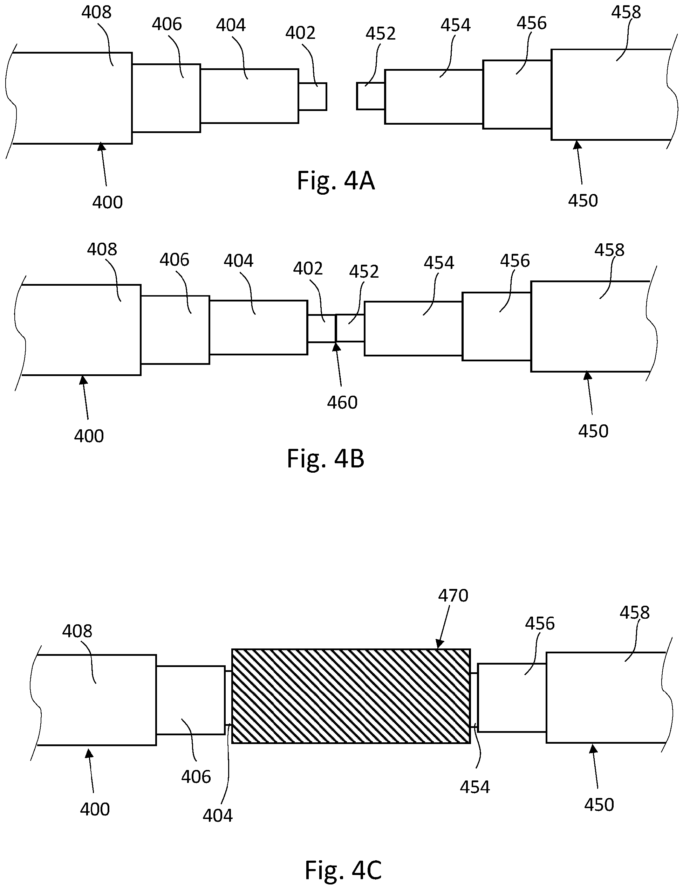

   Fig. 4A shows the provision of a first cable and a second cable;
   Fig. 4B shows jointing a conductor of the first cable to a conductor of a second cable;
   Fig. 4C shows insulation provided around the jointed first and second conductors;

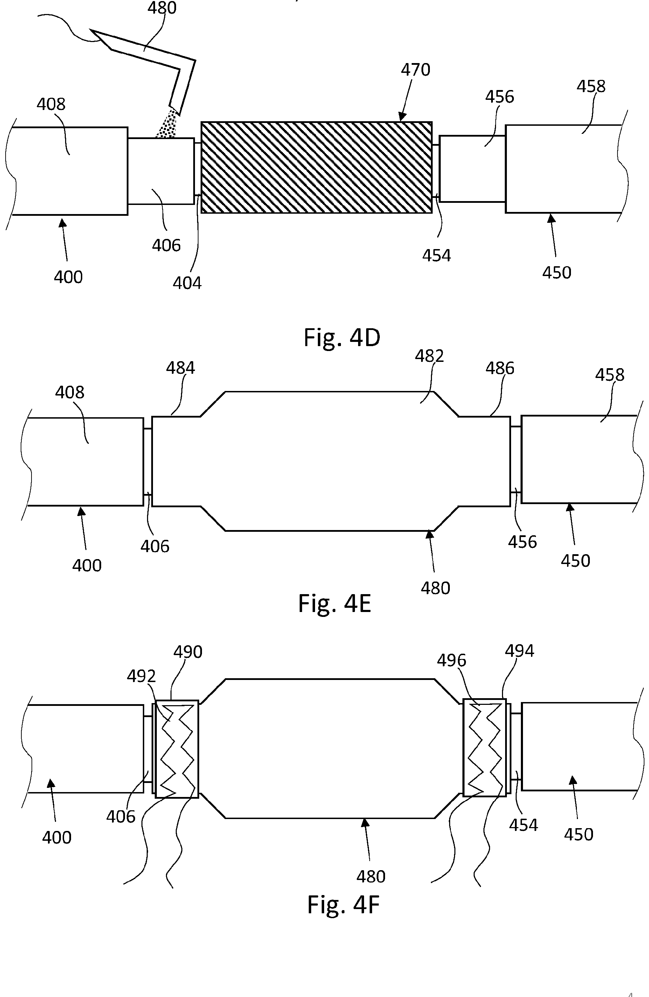

   Fig. 4D shows cleaning of the first and second water barriers of the first and second cables to reduce surface roughness;
   Fig. 4E shows the provision of a water-barrier sheath provided around the jointed first and second cable cores;
   Fig. 4F shows the formation of bonds between the water-barrier sheath and the first and second water barriers using a solid-state process according to a first example;

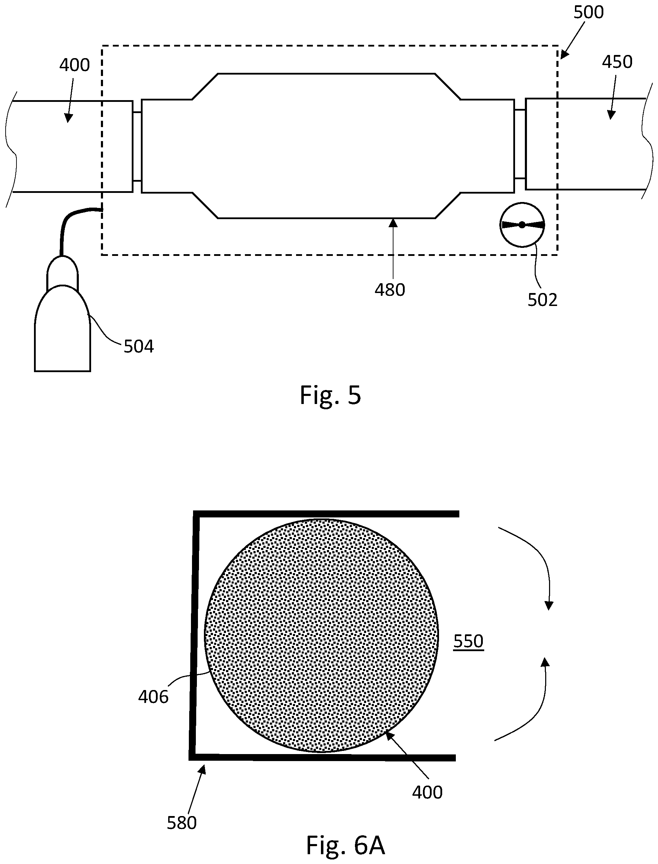

   Fig. 5 shows an optional step during the formation of bonds between the water-barrier sheath and the first and second water barriers;
   Fig. 6A shows a cross-sectional schematic view of a second example of a water-barrier sheath and wrapping said sheath around the jointed first and second cable cores;

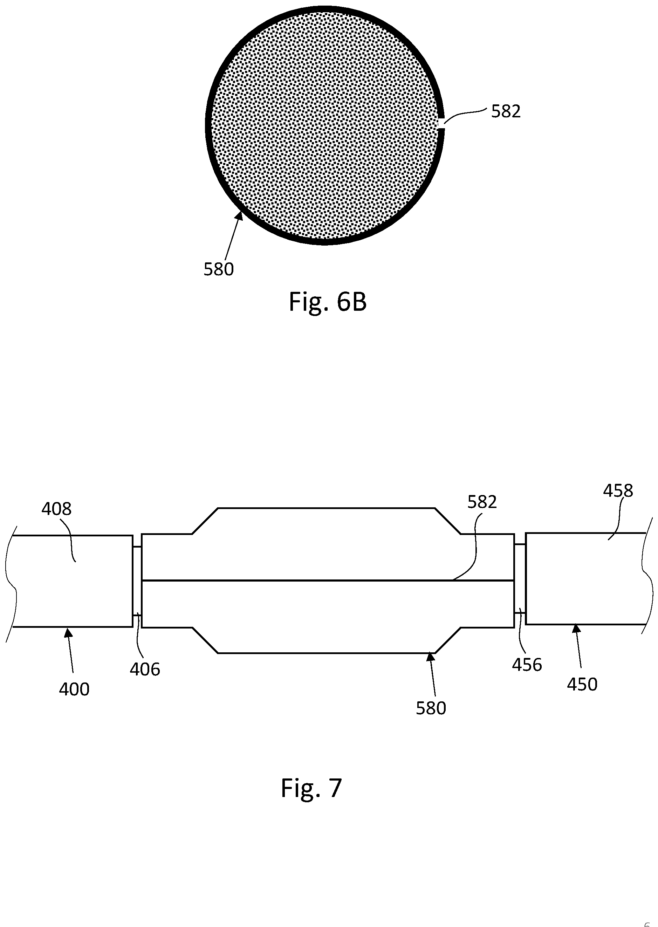

   Fig. 6B shows a cross-sectional view of the sheath of Fig. 6A wrapped around the jointed first and second cable cores; and
   Fig. 7 shows a side view of Fig. 6B.

### Detailed description of the invention

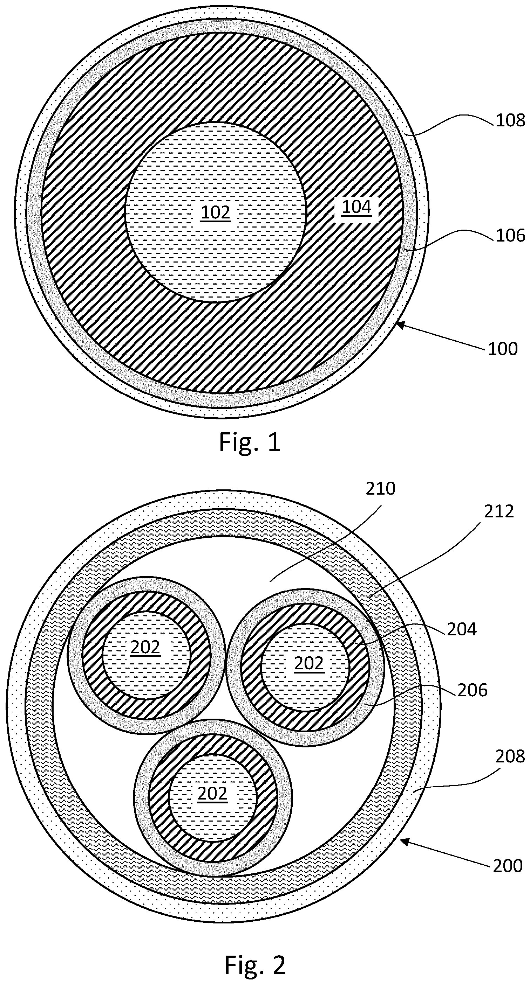

Fig. 1 shows a cross-sectional schematic view of a first example of a high-voltage subsea cable 100 comprising a single core (represented by reference numerals 102 and 104 in Figure 1). The single-cored cable 100 comprises a conductor or conductive core 102 comprising or consisting of an electrically conductive material (e.g. metal such as copper). In examples, the conductor 102 comprises a plurality of individual conductive strands or wires. The conductor 102 is surrounded by an insulating system 104 in some examples. The insulating system may comprise multiple layers. For example, the system may comprise a first or inner semi-conductive layer, then an insulating layer, and then a second or outer semi-conductive layer. The insulating system 104 is surrounded by a water-barrier layer 106. In this example, the water-barrier 106 layer comprises lead and is arranged to provide a water-tight seal around the insulating system 104 / conductor 102 to prevent the ingress of water and to prevent water treeing in the insulating system 104. The water-barrier layer 106 is surrounded by a protective and / or armoured layer 108 that is arranged to provide protection to the cable to prevent damage when the cable 100 is laid and / or is otherwise dragged along the sea floor.

Fig. 2 shows a cross-sectional schematic view of a second example of a high-voltage subsea cable 200. In the second example, the cable 200 comprises three cores. Each core comprises a conductor or conductor 202 comprising or consisting of an electrically conductive material (e.g. metal such as copper). The conductor 202 is surrounded by an insulating system 204. In this example, each of the three cores further comprises an inner water-barrier layer 206 surrounding the insulating system 204. In this example, the inner water-barrier layer 206 comprises lead and is arranged to prevent ingress of water into the respective conductor 202 and to prevent water treeing. The three cores are embedded in an filler material 210. In some examples, the filler material 210 may comprise an electrically insulating material. In some examples, optical fibres for data transmission are embedded. Said optical fibres are not shown in Fig. 2. The filler material 210 is surrounded by an outer water-barrier layer 212 which, in this example, comprises lead. Again, the outer water-barrier layer 212 is arranged to prevent ingress of moisture into the inner layers and cores of the cable 200. The cable 200 further comprises a protective or armoured layer 208 that is arranged to provide protection to the cable to prevent damage when the cable 200 is laid and / or is otherwise dragged along the sea floor.

The cable 200 has been described as comprising both inner and outer water barrier layers 206, 212. However, other examples may comprise only the three inner water barrier layers 206 or only the outer water barrier layer 212.

Figs. 1 and 2 are schematic and may not show all details, layers or components of the respective cables. As the skilled reader will appreciate, there may be additional layers depending on the function of the cable.

The single cored cable 100 of the first example may be suitable for power transmission of direct current (DC). The triple cored cable 200 of the second example may be suitable for power transmission of alternating current (AC).

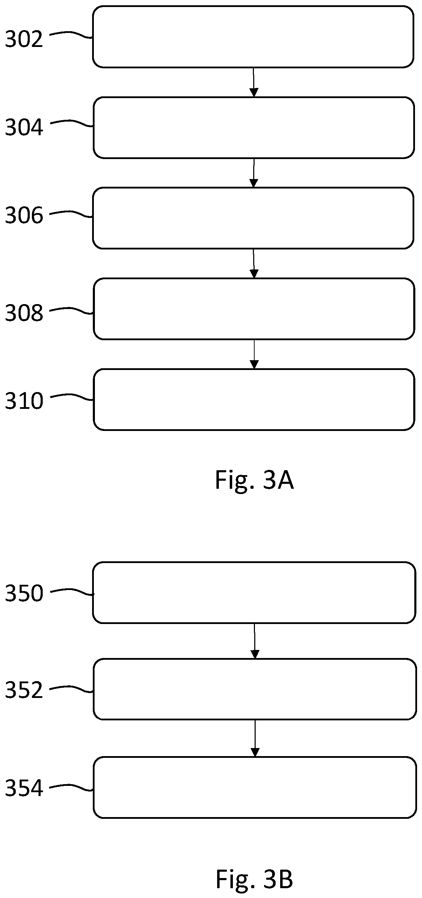

Fig. 3A shows a flow diagram of a method of jointing a first and second cable according to the present disclosure. In other words, the method comprises the use of a solid-state diffusion process to form bonds in the jointing of a first cable to a second cable.

Step 302 of the method is illustrated in Fig. 4A and comprises providing a first cable 400 (or cable portion) and a second cable 450 (or cable portion). In this example, the first and second cables 400, 450 are substantially the same as the cable shown in Fig. 1. However, the method can equally be applied to cables of the type shown in Fig. 2.

The first cable 400 comprises a first conductor 402. The first cable 400 further comprises a first insulating system 404 (insulating layer) surrounding the first conductor 402. The first conductor 402 and the first insulating system 404 are collectively referred to as the (first) cable core of the first cable 400. The first cable 400 further comprises a first water barrier layer 406 surrounding the insulating system 404 / first conductor. In this example, the first water barrier layer 406 comprises or consists of lead. The first cable 400 further comprises a first protective (and / or armoured) layer 408 surrounding the first water barrier layer 406. The first protective layer 408 takes the forms of a polymeric sheath in some examples.

The second cable 450 comprises a second conductor 452. The second cable 450 further comprises a second insulating system 454 surrounding the second conductor 452. The second conductor 452 and the second insulating system 454 are collectively referred to as the (second) cable core of the second cable 450. The second cable 450 further comprises a second water barrier layer 456 surrounding the second insulating system 454 / second cable core. In this example, the second water barrier layer 456 comprises or consists of lead. The second cable 450 further comprises a second protective layer 458 surrounding the second water barrier layer 456. The second protective layer 458 takes the forms of a polymeric sheath in some examples.

Step 304 of the method is illustrated in Fig. 4B and Fig. 4C and comprises jointing the cable cores of the first and second cables 400,450. This comprises jointing or connecting the first and second conductors 400,450 and then jointing the first and second insulating systems 404,454.

In more detail, Fig. 4B shows jointing or connecting the first conductor 402 to the second conductor 452 to form bond 460. The skilled reader will be familiar with methods of connecting the first conductor 402 to the second conductor 450. For example, each of the first and second conductors may comprise a plurality of individual conductive strands. In such examples, individual conductive strands of the first conductor 402 may be wrapped around conductive strands of the second conductor 402, or vice versa. In other example, a butt-weld may be used to connect the first and second conductors. Fig. 4C shows jointing the first and second insulating systems 404, 454 using an insulating sheath 470 bonded or connected to the first insulating system 404 at a first end and bonded or connected to the second insulating system 454 at a second end. The insulating sheath 470 is electrically insulating in examples. The insulating sheath 470 comprises polymeric materials in examples. In some examples, the insulating sheath 470 is provided as a pre-moulded piece of insulation that is manipulated to surround the joint between first and second conductors 402, 452. In some examples, the insulating sheath is formed directly on the joint using injection moulding.

Step 306 of the method is illustrated in Fig. 4D and comprises cleaning exposed portions of the water barrier layers 406, 456 of the first and second cable 400, 450. In this example, the cleaning comprises the use of a plasma applicator 480 (or plasma cleaner) such as the Plasmabeam PC. In examples, cleaning said surfaces comprises removing an oxidation layer from the exposed surfaces. In examples, cleaning said surfaces comprises reducing the surface roughness of the exposed surfaces. In this example, cleaning results in the surface roughness being no greater than 1.5 micrometres. In other examples, a pulsed laser such as a rust-cleaning laser may be used to clean the contact surfaces.

Step 308 of the method is illustrated in Fig. 4E and comprises providing an intermediate water barrier 480 around the joint such that a first end 484 of the intermediate water barrier surrounds the first water barrier layer 406 of the first cable 400 and a second end 486 of the intermediate water barrier surrounds the second water barrier layer 456. In this example, the intermediate water barrier 480 is substantially hollow. A central portion 482 of the intermediate water barrier 480 is substantially cylindrical / tubular. The central portion 482 provides a cavity arranged to be large enough to receive the insulating sheath 470 (which typically may have a larger diameter than the diameter of the cable cores in portions away from the joint). The intermediate water barrier 480 comprises tapered portions in which the diameter of the intermediate water barrier 480 decrease towards the first and second ends 484, 486. At the first and second ends 484, 486, the diameter of the intermediate water barrier 480 may substantially match outer diameters of the first and second water barrier layers 406,456, respectively.

In the example shown in Fig. 4E, the intermediate water barrier 480 is provided as a pre-made tube. Thus, it may be necessary to slide the intermediate water barrier 480 on to the first or second cable between step 302 and 304 of the method (i.e. prior to jointing the cable cores of the first and second cables 400,450). The intermediate water barrier 480 can then be slid down to the position shown in Fig. 4E (over the joint) at the appropriate time. The first and second ends of the intermediate water barrier 480 may initially be provided such that the first and second ends have a diameter that is wide enough to slide or roll over the insulating sheath 470. Thus, step 308 of the method may further comprise shaping or moulding the first and second ends 484, 486 of the intermediate water barrier 480 to contact the respective first and second water barrier layers 406,456. This may be achieved by rolling down the end of the of tube until it fits snuggle around or over the insulating sheath 470 and adjoining parts. The intermediate water barrier 480 may comprise a malleable material such as lead to enable the shaping.

In examples, step 306 of the method additionally comprises cleaning the inside surfaces of the first and second ends 484,486 of the intermediate water barrier 480 that come into contact with the first and second water barrier layers 406, 456 (e.g. with the plasma applicator 480) to reduce the surface roughness to 1.5 micrometres or less).

In examples, the intermediate water barrier 480 comprises or consists of lead and may be referred to as a sheath or a lead sheath. In examples, the intermediate water barrier 480 is substantially the same as the sort of lead sheath used in jointing comprising conventional lead wiping.

Step 310 of the method comprises bonding the intermediate water barrier 480 to the first and second water barriers 406 and 456 using a solid-state diffusion process. This results in first and second bonds being formed. The first bond is between the first end 484 of the intermediate water barrier 480 and the first water barrier 406. The second bond is between the second end 486 of the intermediate water barrier 480 and the second water barrier 456. The first and second bonds are water-tight and extend continuously around the circumferences of the respective first and second water barrier layers.

Fig. 3B shows more detail of the solid-state diffusion process.

Step 350 of Fig. 3B comprises applying pressure to retain close contact between the first and second ends 484,486 of the intermediate water barrier 480 and the first and second water barrier layers 406,456, respectively.

Step 352 of Fig. 4B comprises heating at least one of, optionally all of, the intermediate water barrier 480 and the first and second water barrier layers at the interface therebetween. Steps 350 and 352 may be performed substantially simultaneously, or may overlap, such that for at least a period of time both pressure and heating is applied simultaneously.

An example of performing steps 350 and 352 is shown in Fig. 4F. In this example, first and second clamps 490, 494 have been positioned to surround the first and second ends 484, 486 of the intermediate water barrier 480. The first and second clamps 490 extend around the perimeter of the intermediate water barrier 480 at its respective ends. The first and second clamps 490 apply a radial pressure inwards to ensure close contact between the intermediate water barrier 480 and the first and second water barrier layers 406,456. In this example, the radial pressure applied by the first and second clamps 490 is substantially constant around the perimeter of the intermediate water barrier 480.

In this example, both the first and second clamps 490, 494 comprise resistive heating elements 492, 496. Step 352 is performed by passing a current through the resistive heating elements 492, 496. This has a heating effect increasing the temperature of at least the portions of the intermediate water barrier 480 that the clamps 490, 494 are in contact with. By providing the resistive heating elements 492, 496 in the clamps, both pressure and heating can be applied simultaneously. In other words, the clamps 490, 494 can be used to perform steps 350,352 simultaneously.

In this example, the increased pressure and temperature of steps 350 and 352 triggers a diffusion bonding process in which atoms of the intermediate water barrier 480 diffuse into the first and second water barrier layers 406,456 (and / or vice versa). In particular, the increased pressure and temperature triggers and / or accelerates the diffusion. This starts the formation of the first and second bonds (described above). It should be noted that the cleaning step 306 also contributes to the activation and / or acceleration of the diffusion. By removing the oxidation layer and reducing the surface roughness, the (lead) atoms of the intermediate water barrier can be brought into closer contact with the (lead) atoms of the first and second water barrier layers 406,456. The likelihood or rate of diffusion increases as the proximity of the atoms of different workpieces increases.

Step 354 of the method comprises maintaining the pressure and heating of steps 350,352 for a predetermined holding time. This predetermined holding time is long enough that complete, watertight and acceptably strong first and second bonds are formed between the intermediate water barrier 480 and the first and second water barrier layers 406, 456, respectively.

It should be understood that the conditions for triggering solid-state diffusion will be different depending on the materials to be bonded and that these conditions can be altered to change the rate of diffusion (e.g. so the bond is formed in a desired amount of time. Close contact (and so cleaning) can increase the rate of diffusion. Furthermore, increasing the temperature and / or pressure will typically increase the rate of diffusion. However, the temperature should generally not be so high as to melt the pieces to be bonded. Nor should the temperature be so high as otherwise damage the pieces being bonded. For example, in the case of subsea cables, the inner layers may comprise materials (such as dielectrics) that may become damaged or melt at lower temperatures that the melting temperature of the materials directly being bonded. The inventors have found that a temperature of less than 90% of the melting point of the materials to be bonded is typically acceptable to avoid melting but may need to be lower to ensure that the cable is not damaged. Similarly, the pressure should generally not be so high as to cause significant deformation or damage of the pieces being bonded. The inventors have found that a pressure of less than 50% of the ultimate tensile strength of the pieces being bonded is typically acceptable to avoid deformation and damage as a result of applied pressure.

Therefore, when implementing solid-state diffusion in a jointing method, the skilled reader should choose appropriate conditions that ensure that a) solid-state diffusion is triggered or activated; b) that the diffusion rate is high enough to achieve acceptable bonding in desired hold time; c) to avoid damage to the cable to be jointed. If a) and b) cannot be achieved without causing c), then b) may need to be sacrificed. In particular, lower temperatures or pressures may need to be used to avoid c) but this may cause a slow rate of diffusion. The slow rate of diffusion can be compensated for by increasing the hold time.

In some examples, it may be chosen to only apply heat or only apply pressure (rather than to apply both) to trigger solid-state diffusion.

As above, in this example, the intermediate water barrier 480 and the first and second water barriers 406,456 comprise or consist of lead. One example of optimised the conditions for the solid-state diffusion process in such pieces is set out below.

Cleaning (using a plasma applicator or pulsed laser) the contact surfaces of the intermediate water barrier layer and the first and second water barrier layers to a surface roughness of no greater than 1.5 micrometres. Applying (radial) pressure of 4 Megapascals using the clamps 490, 494. This pressure is low enough to avoid deformation of the lead pieces. Applying heating, using the clamps 490, 494, to heat the pieces to be bonded to a temperature of 175 degree Celsius. This is low enough to avoid melting of the lead and prevent damage to the subsea cable more generally. The pressure and heating are maintained for a holding time of 2 hours. As above, if the holding time is increased, either or both of the temperature or pressure could be decreased while achieving a similar bond.

In some examples, the intermediate water barrier 480 and the first and second water barriers 406,456 comprise or consist of a material other than lead such as copper, nickel, tin or titanium. The melting temperature of each of these metals, other than tin, is higher than the melting temperature of lead. Thus, higher temperatures and / or pressures may be needed to trigger solid-state diffusion and / or to maintain high rates of diffusion. If necessary, the hold time can be increased (relative to the hold time for lead) to avoid the need to increase the temperature or pressure to such an extent as to damage the cable when bonding copper, nickel or titanium, for example. Tin has a lower melting point than lead and so the opposite may be true, and a shorter hold time may be used. It is within the remit of the skilled reader to identify or select suitable conditions for achieving solid-state diffusion bonding depending on the materials being bonded.

In some examples, the method of solid-state diffusion additionally comprises performing step 350 and / or step 352 in a controlled atmosphere. In fact, the steps of the method after the cleaning step may all be performed in the controlled atmosphere. The controlled atmosphere may be controlled such that a portion of air (optionally, substantially all of the air) is replaced with an inert gas. In this example, the inert gas is argon. The benefit of the controlled atmosphere is that oxidation of the contact surfaces of the intermediate water barrier 480 and the first and second water barrier layers 406, 456 is prevented or substantially reduced. Lead has a relatively very slow oxidation rate. So, when the pieces to be bonded comprise or consist of lead, it may not be necessary to perform the solid-state diffusion process in a controlled atmosphere. However, metals such as titanium have a relatively much higher oxidation rate and so a layer of titanium oxide may form on the contact surfaces relatively quickly after the cleaning step. This layer may prevent close contact between the titanium atoms of the pieces to be bonded and so reduce the rate of diffusion. Formation of this layer can be reduced or prevented in the controlled environment (in the substantial absence of oxygen) such that performing the solid-state diffusion process in the controlled environment can increase the diffusion rate.

Fig. 5 shows a schematic view of an apparatus 500 providing a controlled atmosphere. The apparatus 500 comprises a container 506 surrounding the joint and intermediate water barrier 480. The container 506 is substantially airtight and is sealed around the first and second cables 400, 450. The apparatus 500 further comprises an extractor fan / vent 502 arranged to remove air from the container 506. The apparatus 500 further comprises a gas source 504 of argon. The gas source 504 is fluidly connected to the container 506. Thus, a portion of the original air in the container 506 is replaced with argon.

Fig. 6A shows a cross-sectional schematic view of a second example of a water barrier sheath or intermediate water barrier 580.

The previously described intermediate water barrier 480 (of Fig. 4E) was provided as a conventional pre-formed tubular structure of the type used in conventional lead wiping processes. Such an intermediate water barrier 480 needs to be rolled onto one of the cables 400, 450 prior to any of the jointing steps. This is inconvenient. The use of a solid-state diffusion process opens up the possibility of a new type of intermediate water barrier 480, as shown in Figure 6A.

The new or second example of intermediate water barrier 580 is not tubular. Instead, it is an open structure that can be wrapped around the joint / first and second water barrier layers 406,456. Thus, there is no need to slide the intermediate water barrier 580 onto a cable prior to jointing. The wrapping process is shown more clearly in Fig. 6A and 6B.

Fig. 6A and 6B are both cross-sectional views through the first cable 400 at the point that the first water barrier layer 406 is exposed (i.e. where a joint or bond needs to be made between an intermediate water barrier and the first water barrier layer 406). Fig. 6A shows how the intermediate water barrier 580 is an open structure which can be folded and bent to comprise an opening 550 which can receive a cable. Fig. 6B shows how the intermediate water barrier 580 can be shaped and manipulated to completely wrap around the first cable with contact being achieved substantially continuously around the intermediate water barrier 580 and the first water barrier layer 406. There is a seam 582 or gap formed where the two ends of the intermediate water barrier 580 meet each other. This seam is shown in Fig. 6B and also in Fig. 7 which shows how the seam extends longitudinally along the intermediate water barrier 580.

For the intermediate water barrier 580 to provide a water-tight seal around the joint, the seam 582 or gap needs to be closed. This is why the second intermediate water barrier 580 is not generally suitable for lead wiping, because lead wiping would need to be performed along the full length of the seam 582 which is impractical, time consuming and wasteful of both labour and resources. However, when solid-state diffusion is used to form the bonds, it is straightforward to extend the solid-state diffusion process to form a bond along the entire length of seam 582 (such that the intermediate water barrier 580 is bonded to itself along the seam 582). Bonding is achieved is contact is maintained between the two ends of the intermediate water barrier 580 along the length of the seam 582 and the conditions of temperature and pressure are maintained for the designated holding time.

An alternative pressure and heating means might be appropriate in this example to the clamps of the previous example. For example, apparatus 500 of Fig. 5 could be adapted to act as both an oven and a pressure chamber in addition to or instead of providing a controlled environment. Thus, heating and pressure may be applied uniformly causing bonding at the seam 582 simultaneously to the formation of the first and second bonds between the first and second water barriers 406, 456 and the intermediate water barrier 580. The process described in relation to Figs. 6A, 6B and 7 could also be referred to as a kind of heat shrink.

## Claims

1. A method of jointing a first subsea cable (400) to a second subsea cable (450), the first subsea cable (400) comprising a first water barrier layer (406) surrounding a first cable core (402) and the second subsea cable (450) comprising a second water barrier layer (456) surrounding a second cable core (452), the method comprising:
jointing the first and second water barrier layers (406,456), the jointing comprising the use of a solid-state diffusion process.

2. A method as defined in claim 1, wherein jointing the first and second water barrier layers (406,456) comprises: using a solid-state diffusion process to form a first bond between an intermediate water barrier (480) and the first water barrier layer (406) while a portion of the first water barrier (406) is in contact with the intermediate water barrier (480).

3. A method as defined in claim 2, wherein jointing the first and second water barrier layers further (406,456) comprises: using a solid-state diffusion process to form a second bond between the intermediate water barrier (480) and the second water barrier layer (456) while a portion of the second water barrier layer is in contact with the intermediate water barrier (480).

4. A method as defined in claim 2 or 3, wherein the first and / or second bonds form a continuous seal around first and second water barrier layers (406,456), respectively.

5. A method as defined in any one of the preceding claims, wherein at least one of the first and second water barrier layers (406,456), and / or the intermediate water barrier when dependent on claim 2, comprises a metal.

6. A method as defined in claim 5, wherein the metal is lead, copper, nickel, tin or titanium.

7. A method as defined in claim 5 or 6, wherein each of the intermediate water barrier (480) and the first and second water barrier layers (406,456) comprise the metal.

8. A method as defined in any one of claims 2 to 7, wherein the solid-state diffusion process used to form the first bond, or the second bond when dependent on claim 3, comprises applying a pressure that is greater than atmospheric pressure.

9. A method as defined in claim 8, wherein the pressure is 1 Megapascal or greater.

10. A method as defined in any one of claims 2 to 9, wherein the solid-state diffusion process used to form the first bond, and the second bond when dependent on claim 3, comprises heating at least one of the portions of the respective first or second water barrier layer (406,456) and the intermediate water barrier (480) that are in contact with one another to a temperature of greater than 50% of the melting point of the intermediate water barrier (480).

11. A method as defined in claim 8 or 9 wherein the solid-state diffusion process comprises:
applying pressure for at least 1 hour and less than 24 hours; and / or
when dependent on claim 10, heating the for at least 1 hour and less than 24 hours.

12. A method as defined in any one of claims 2 to 11, wherein the solid-state diffusion process used to form the first bond, and/or the second bond when dependent on claim 3, comprises cleaning at least the portions of the respective first or second water barrier layers (406,456) and the intermediate water barrier (480) that contact one another prior to forming the respective bond.

13. A method as defined in any one of claims 2 to 12, wherein the solid-state diffusion process used to form the first bond, and the second bond when dependent on claim 3, comprises replacing a portion of air surrounding the joint with an inert gas such as a noble gas or nitrogen.

14. A method as defined in any one of the preceding claims, further comprising jointing the first and second cable cores (402,452) before jointing the first and second water barrier layers (406,456).

15. A jointed cable comprising a first cable portion (400) jointed to a second cable portion (450) using a method as defined in any one of the preceding claims such that a first water barrier layer (406) of the first cable portion (400) is jointed to a second water barrier layer (456) of the second cable portion (450).
